# EUROPÄISCHE PATENTSCHRIFT

(11) **EP 1 734 174 B1**
(45) Veröffentlichungstag und Bekanntmachung des Hinweises auf die Patenterteilung: **09.09.2009**
(21) Anmeldenummer: 06011180.4
(22) Anmeldetag: 31.05.2006
(51) Int. Cl.: D21D 5/02, D21H 19/38, D21H 17/01, D21F 1/66

(54) **Verfahren zur Wiederverwertung von Füllstoffen und Streichpigmenten der Papier-,Pappe oder Kartonherstellung**
Process for the recycling of fillers and coating pigments at the production of paper and board
Procédé pour le recyclage de charges et de pigments de revêtement dans la production de papier et carton

(30) Priorität: 13.06.2005 AT 9942005
(43) Veröffentlichungstag der Anmeldung: 20.12.2006
(73) Patentinhaber: Andritz AG, 8045 Graz (AT)
(72) Erfinder: Gabl, Helmuth, Dr., 8046 Graz (AT)
(74) Vertreter: Schweinzer, Friedrich

(56) Entgegenhaltungen:
- WO-A-92/08001
- DE-A1- 2 946 160
- DE-B1- 2 836 186
- FI-C- 93 753
- FI-C- 97 736
- US-A- 3 873 410
- US-A- 3 964 996
- US-A1- 2003 041 990

## Beschreibung

Die Erfindung betrifft ein Verfahren zur Wiederverwertung von Füllstoffen und Streichpigmenten der Papier-, Pappe- oder Kartonherstellung aus dem Ausschusssystem bzw. der Weiterverarbeitung von Papierbahnen nach der Papiermaschine wie Rollenschneider, Umroller, Querschneider etc.. Drucktechnische Erfordernisse verlangen eine stetige Verbesserung der Papieroberflächenqualität. Der Papiermacher löst diese Anforderung durch höhere Zusätze an mineralischen Substanzen (Pigmente wie Calciumcarbonate, Kaoline, Bentonite, Talkum, Aluminiumsilikate, Titandioxide, Satinweiß, Calciumsilikat, Sulfate wie Blanc fix, Barytweiß, Gips oder ähnliche). Dies führt einerseits im Gesamtpapier- und -kartonherstellprozess zu einer zusätzlichen Belastung der Kreisläufe, andererseits wird die Umwelt in Form von notwendigem Deponieraum und Abbau von Frischpigmenten belastet, wobei auch hohe Frachtkosten auftreten. Ein weiterer kritischer Punkt ergibt sich für den Recyclingprozess, da der damit verbundene Eintrag von Nichtfaserstoffen abzutrennen und auszuschleusen ist. Der Wiederverwerter von recyclierten Altpapieren wird gezwungen den Überschuss an mineralischen Stoffen gezielt zu entfernen, was mit erheblichen Kosten (z.B. Abtrennung, Deponie, Transport) verbunden ist.

Im sogenannten Sekundärkreislauf Pigmente ist die Aufbereitung von Cleanerrejekten z.B. mit dem FilRec® Verfahren nach der SE B 435849, FI C 93753, FI C 97736, FI C 97738, US A 4167438, WO A 92/08001 bekannt, wobei die Rejektrückgewinnungsrate bei ca. 90% liegt. Die Wiedergewinnung von Streichereiabwässern erfolgt mittels Siebung und Reinigung, Ultrafiltration etc. Im Tertiärkreislauf werden die Restwasserschlämme z.B. gemäß der EP 0492 121 B1 aus den unterschiedlichen Anfallstellen erfasst und gemeinsam einer Kläre oder wie in der EP 0 910 697 B1 beschrieben nach deren Sammlung wieder aufbereitet. In diesem speziellen Fall werden die aus den Abwasserschlämmen der Streichereiabwässer, Deinkinganlagen, innerbetrieblichen Kläranlagen oder Abscheidvorrichtungen mit Frischpigment in Form von Pulver, Frischfüllstoff zu einem frischfüllstoffhaltigen Slurry vermischt und anschließend das Frischpigment oder Frischfüllstoff auf die gewünschte Korngrößenverteilung zu einem Pigmentslurry vermahlen. Der Kern dieser Erfindung ist die Anlieferung des Frischpigmentes in einer definierten Grundkörnung vorzugsweise als hochkonzentrierter Slurry oder als Feststoff.

Die US 2003/041990 A1 offenbart nur die Wiederverwertung von Füllstoffen und

Pigmenten in Restwasserschlämmen. Die DE 28 36 186 B1 beschreibt die Entaschung von Faserstoffsuspensionen bei der Altpapieraufbereitung, wobei hinter der Grobsortierung eine Feinsortierung mit einem Sortiersieb solcher Lochung durchgeführt wird, dass Asche und eine kurzfaserige Fraktion das Sieb passieren und anschließend eine Trennung in Asche und wieder verwendbare Fasern erfolgt. Eine Wiederverwertung der Pigmente und Füllstoffe wird nicht offenbart.

Werden die Rejektstoffe aus der Streicherei, den Cleaneranlagen oder anderer Wassersystemkreisläufe einer wie in den obigen Verfahren beschriebenen Wiederaufbereitung zugeführt, sind einerseits zur Erreichung einer gezielten Qualitätsstufe Frischfüllstoffe zuzusetzen, andererseits können nur selektiv gesammelte Abwässer - hochpigmenthältige Grundsubstanzen - nach einer Reinigungsstufe qualitativ sinnvoll aufbereitet werden.

Der Erfindung liegt daher die Aufgabe zugrunde die wiedergewonnene Mischung im Wesentlichen bestehend aus Pigment-, Faser- und Bindestoffen selektiv zu trennen und die Einzelkomponenten voneinander getrennt derart aufzubereiten, dass für jede Einzelkomponente nahezu ähnliche Rohstoffeigenschaften erreicht werden, wie diese beim nativen Produkt vorgelegen sind. Dabei werden Pigmente und Binder gemeinsam behandelt. Dies bedeutet, dass die Faserkomponente separate Reinigungsstufen und vorteilhafterweise einen Mahlprozess zur Verbesserung der papiertechnologischen Eigenschaften zu durchlaufen hat.

Die Erfindung ist daher **dadurch gekennzeichnet, dass** diese Stoffe in eine Pigment- und Faserfraktion aufgeteilt und wieder im Faser- oder Pigmentkreislauf eingesetzt werden, wobei die Fraktionierung in Faserstoffe und

Pigment als Entaschung vorgesehen ist. Die Trennung (Entaschung) kann mit am Markt üblichen Geräten durchgeführt werden. Die Vorteile der Trennung von Pigment- und Faserstoffkomponente erlauben eine gezielte Nachbehandlung der Einzelfraktionen. So erfordert eine Mahlung von Fasern einen Feststoffbereich von ca. 4 bis 35% und eine Mahlung von Pigment einen Bereich von 20 bis 75% Feststoffgehalt. Zudem sind die Mahlmaschinen von unterschiedlicher maschinentechnischer Ausführung um den rheologischen Eigenschaften Rechnung zu tragen. Aufgrund der Trennverfahrenstechnologie werden die hohen Beladungen an anionischem Trash der Pigmentlinie zugeführt. Dadurch verbessert sich der Papiermaschinenkreislauf hinsichtlich Retentions-, Leimungs-, Formationsverhalten etc.

Die Erfindung ist außerdem **dadurch gekennzeichnet, dass** der Pigmentstoffstrom eingedickt wird. Die gezielte Eindickung des Pigmentstromes mit entsprechender Wasserrückgewinnung /Kreislaufführung erlaubt erst die Optimierung der Korngrößenverteilung bei der Pigmentmahlung zu einem Vorstrichpigment. Erfindungsgemäß wird dann der eingedickte Pigmentstoffstrom einer Mahlung unterworfen und wieder dem Papier-, Pappe- oder Kartonherstellungsprozess zugeführt. Der an organischem Material verarmte Pigmentstrom wird nach dessen Eindickung und Reinigung (Abtrennung von Druckfarbenpartikel) und z.B. unter Zusatz von Dispergiermittel vermahlen. Erst dadurch wird es möglich die bisherigen Schaltvarianten der Kreislaufführung abzukoppeln und das rückgewonnene Pigment im Vorstrich oder bei höchster Reinigung auch im Deckstrich wieder zu verwenden.

Durch die Zuführung des gemahlenen Pigmentstoffstroms zum Papier-, Pappe- oder Kartonherstellungsprozess, ermöglicht wieder die Verwendung des gemahlenen Pigmentstoffstroms Streichpigment. Dadurch kann der Bedarf an Frischpigment für Vorstrich und Deckstrich stark reduziert werden.

Den Faserstrom gilt es möglichst von Pigmenten und vor allem von Binder - Pigment- Agglomeraten gemeinsam mit der anionischen Fracht frei zu bekommen um zu vermeiden, dass diese Bestandteile beim Wiedereinsatz zum Verursacher von Bladekratzern, - streifen oder Strichausbrecher, und anderen Runabilityproblemen führen können. Daher können im Faserstrom zusätzlich Hydrozyklone installiert werden, die diese Agglomerate abscheiden können und in weiterer Folge der Pigmentlinie zuführen.

Eine günstige Weiterbildung der Erfindung ist **dadurch gekennzeichnet, dass** in weiterer Folge eine Feinstwäsche vorgesehen ist um die Faserkomponenten weiter von anionischen Frachten und Pigmenten zu befreien

Eine vorteilhafte Ausgestaltung der Erfindung ist **dadurch gekennzeichnet, dass** zusätzlich die Füllstoffe und Streichpigmente von den Restwasserschlämmen der Streichereiwässer, Deinkinganlagen, innerbetrieblichen Kläranlagen oder

Abscheideanlagen der Wiederverwertung zugeführt werden.

Eine günstige Ausgestaltung der Erfindung ist **dadurch gekennzeichnet, dass** Frischpigment zugemischt wird. Dadurch ergibt sich die Möglichkeit den Basisstrom auf geringere Trockengehalte einzudicken. Damit ergibt sich mehr Freiraum bei der Pigmentmahlung hinsichtlich Steuerung der Korngrößenverteilung und es ergibt sich eine Kosteneinsparung bei den Eindickmaschinen.

Die Erfindung betrifft auch eine Anlage zur Wiederverwertung von Füllstoffen und Streichpigmenten der Papier-, Pappe- oder Kartonherstellung aus dem Ausschusssystem bzw. der Weiterverarbeitung von Papierbahnen nach der Papiermaschine wie Rollenschneider, Umroller, Querschneider etc. Diese ist **dadurch gekennzeichnet, dass** eine Entaschungsvorrichtung vorgesehen ist, nach der Entaschungsvorrichtung eine Faserlinie zur Aufbereitung der Fasern und eine Pigmentlinie zur Rückgewinnung der Füllstoffe angeordnet sind, wobei ein Eindickaggregat vorgesehen ist und anschließend an das Eindickaggregat ein Pigmentmahlaggregat angeordnet ist. Die Trennung (Entaschung) kann mit am Markt üblichen Geräten durchgeführt werden. Die Vorteile der Trennung von Pigment- und Faserstoffkomponente erlauben eine gezielte Nachbehandlung der Einzelfraktionen, wobei auch den unterschiedlichen rheologischen Eigenschaften Rechnung getragen werden kann. Wenn der Stoff auf mindestens 20% eingedickt wird kann einigermaßen kostengünstig gemahlen werden. Bei entsprechender Mahlung kann das Pigment auch im Deckstrich wieder verwendet werden, was zu entsprechenden Einsparungen an Frischpigment führt.

Eine günstige Weiterbildung der Erfindung ist **dadurch gekennzeichnet, dass** zusätzlich die Füllstoffe und Streichpigmente von den Restwasserschlämmen der Streichereiwässer, Deinkinganlagen, innerbetrieblichen Kläranlagen oder Abscheideanlagen der Anlage zur Wiederverwertung zugeführt werden.

Eine vorteilhafte Ausgestaltung der Erfindung ist **dadurch gekennzeichnet, dass** die Entaschungsvorrichtung als Wäscher ausgebildet ist. Damit lassen sich hohe Feststoffgehalte im Pigmentstrom erzielen. Aufgrund hoher Pigmentkonzentrationen verkleinern sich die nachfolgenden Eindickaggregate und führen in weiterer Folge zu geringeren Investitionskosten und operativen Kosten (Energie).

Eine vorteilhafte Weiterbildung der Erfindung ist **dadurch gekennzeichnet, dass** die Faserlinie aus einer Reinigungsstufe mittels Hydrozyklonen (z.B. ein oder mehrstufige Cleaneranlage), einer Eindickstufe sowie einer Fasermahlung besteht. Dadurch können die im Retentat der Entaschungsstufe mitgeführten Grobpartikel (Strichagglomerate) gezielt abgetrennt werden. Das Rejekt aus den Hydrozyklonen wird wiedergewonnen und dem Pigmentkreislauf zugeführt. Daher erhöht sich die Systemausbeute und die Deponie oder Entsorgungskosten werden reduziert.

Eine günstige Weiterbildung der Erfindung ist **dadurch gekennzeichnet, dass** vor der Reinigungsstufe eine Fraktionierung vorgesehen ist. Dies führt zu einer Verbesserung des Abtrenneffektes von Faser zu Pigment sowie zur Verkleinerung der nachfolgenden Prozessschritte wie Eindickung, Cleanerung etc.

Eine günstige Ausgestaltung der Erfindung ist **dadurch gekennzeichnet, dass** in der Pigmentlinie eine Homogenisierungsstufe, z.B. ein Mischungsbehälter vorgesehen ist. Dadurch erfolgt eine Homogenisierung der in Konzentration, Zusammensetzung und Beschaffenheit unterschiedlichen anfallenden "Sekundärrohstoffe" vor der Pigmentmahlung

Eine vorteilhafte Ausgestaltung der Erfindung ist **dadurch gekennzeichnet, dass** nach der Entaschung in der Pigmentlinie eine Feinstwäsche, eine Pigmentflotation oder andere Pigmentreinigungseinheit vorgesehen ist. Die Ausführung einer derartigen Linienkonzeption erweist sich dann besonders vorteilhaft, falls die Rohstoffströme mit Druckfarben z.B. aus dem Deinkingprozess - oder mit ähnlichen Störstoffen angereichert sind. Diese Störstoffe würden die optischen Eigenschaften des gemahlenen Fertigproduktes empfindlich stören (z.B. Weißeabfall). Ungereinigte Pigmente würden aber den Vorteil einer deutlichen Verbesserung der Opazität mit sich bringen.

Eine vorteilhafte Weiterbildung der Erfindung ist **dadurch gekennzeichnet, dass**

Pigmentmahlaggregat als Kugelmühle ausgebildet ist. Diese erlaubt eine kostengünstige und betriebsichere Mahlung des Pigmentstromes speziell bei einer vertikalen Ausführung.

Eine günstige Weiterbildung der Erfindung ist **dadurch gekennzeichnet, dass** im

Bereich der Mahlanlage eine Nachklassierstufe vorgesehen ist. Dadurch kann der Mahlprozess früher abgebrochen werden (Energieeinsparung) mit dem Vorteil, dass die Korngrößenverteilung gleichzeitig verbessert werden kann.

Eine vorteilhafte Ausgestaltung der Anlage ist **dadurch gekennzeichnet, dass** die Eindickfiltrate (Pigment und Faserlinie) einer separaten Wasserreinigungsanlage zugeführt werden, wobei die Wassserreinigungsaggregate vornehmlich der Ausschleusung von anionischen Störstoffen oder der Ladungskontrolle dienen können.

Die Erfindung wird nun anhand der Zeichnungen beispielhaft beschrieben, wobei Fig. 1 eine Anlage nach dem Stand der Technik, Fig. 2 eine Anlage gemäß der Erfindung und Fig. 3 einen erfindungsgemäßen Prozessschritt darstellt.

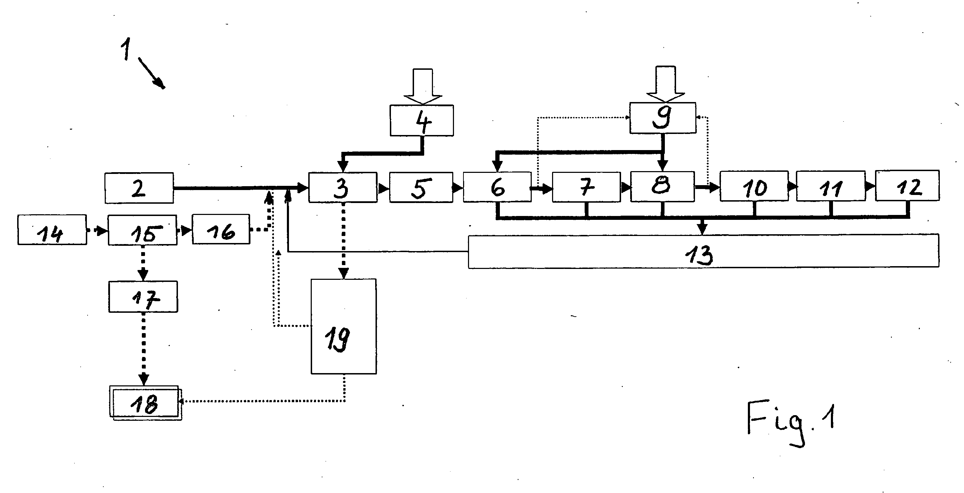

Fig. 1 stellt die einzelnen Prozessschritte bzw. Anlagenteile einer Papierfabrik 1, insbesondere zur Erzeugung von Feinpapieren (z.B. LWC Linie mit Zusatz von Deinkingstoff) mit Einsatz von hochwertigem Rezyklierfasergut, dar. Die Faserstoffsuspension wird aus einer Stoffaufbereitung Frischfaser 2 in eine Mischzentrale 3 im Konstantteil geführt und dort mit der Recyclefaser vermischt.

Hier wird ebenfalls Füllstoff aus einer Füllstoffaufbereitungsanlage 4 zugemischt. Die Suspension wird anschließend in den Papiermaschinennassteil und Vortrockenpartie 5 zu einer Pigmentierung 6 geführt. Nach der Nachtrocknung wird das Papier am Poperoller aufgewickelt. Nach der Umrollung 7 (Ausschussanfallstelle, da Qualitätsfehler ausgeschieden werden) wird die Papierbahn an der Streichmaschine 8 mit einem Oberflächenstrich versehen. Frischpigment wird in einer sogenannten Streichküche 9 mit synthetischen Bindern, Stärke, rheologischen Hilfsmitteln, Farbstoffen, etc, sowie gereinigten Rücklaufmengen von den Streichaggregaten auf die gewünschte Konsistenz gebracht und vermischt. Im neuen Verfahren können zudem vor der Streichküche das "alte" Frischpigment durch die Rückläufe aus den diversen Recyklingkreisläufen z.B. DIP Linie, Pigmente aus dem Ausschuss, Reinigung, Abwasser und Screening vermischt und die Mischung auf eine gewünschte Konsistenz gebracht und gemeinsam vermahlen werden. Anschließend wird der aus Recyclingstoffen bestehende Pigmentslurry der Pigmentierung 6 und/oder der Streichmaschine 8 zugeführt. Das Papier aus der Streichmaschine 8 wird einem weiteren Umroller 10 zugeführt, von wo es über einen Kalander 11 zur Verarbeitung 12 gelangt.

Der Ausschuss 13 mit teilweise hohem Anteil von 20 bis 60 % an anorganischem Material aus den Stufen Pigmentierung 6, Umroller 7, Streichmaschine 8, Umroller 10, Kalander 11 und Verarbeitung 12 wird aufgelöst und in die Mischzentrale 3 zurückgeführt. Der Anteil an Ausschuss kann dabei ca. 15 bis 45 % auf die Endproduktmenge bezogen betragen.

Als zweiter Teil der Faserstoffe wird Recyclefaser aus einer Stoffaufbereitung 14 eingesetzt. Diese wird nach einer Faserstoffentaschung 15 als Fertigstoff 16 der Mischzentrale 3 des Konstantteils zugeführt. Der Ascheanteil aus dem Filtrat der Entaschungsstufe wird standardmäßig in einer Flotationsstufe 17, z. B. einer DAF (Dissolved Air Flotation) abgetrennt und auf eine Deponie oder einer Verbrennung 18 zugeführt. Weiters werden die Rejekte des konstanten Papiermaschinenkreislaufes vornehmlich die Rejekte der Hydrozyklone einer Aufbereitung und Füllstoffwiedergewinnung 19 nach dem Stand der Technik, z. B. dem FilRec^{®} System, zugeführt. Dabei handelt es sich etwa um 3 bis 5% der Produktionsmenge. Der Abfall wird ebenfalls zur Deponie bzw. Verbrennung 18 geführt.

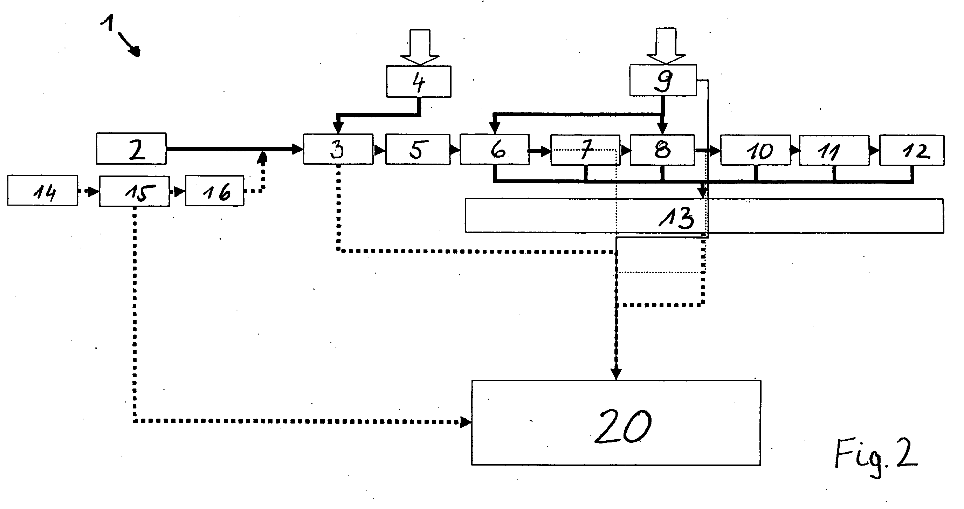

Fig. 2 zeigt ein analoges Schema, wobei gleiche Prozessschritte bzw. Anlagenteile mit den gleichen Bezugszeichen versehen sind, wie in Fig. 1. Der wesentliche Unterschied zum Stand der Technik besteht darin, dass neben dem Ausschuss auch die Rücklaufmengen aus der Pigmentierung 6 und/oder Streichmaschine 8 sowie die Rejektstoffe aus dem Abwasserkreislauf des Konstantteiles des Papiermaschinenkreislaufes 3 einer Rückgewinnungsstufe 20 zugeführt werden. Hier werden ebenfalls die Rejektstoffe aus der Altpapierentaschung (Faserstoffentaschung 15) und den zugeordneten Kreisläufen der Rückgewinnungsstufe 20 eingeleitet. Es werden somit alle Rejektstoffe und Ausschussstoffe erfasst und in der Rückgewinnungsstufe 20 aufbereitet. Die Faserstoffe werden anschließend der Mischzentrale 3 zugeführt, während der mit Füllstoff beladene Strom in der neuartigen Pigmentaufbereitung 20 behandelt und anschließend der Streichküche 9 zugeführt wird, wo er mit oder ohne Zusatz von Frischpigment wieder zur Pigmentierung 6 und/oder Streichmaschine 8 aufgegeben wird. Durch den Einsatz der neuen Rückgewinnungsstufe 20 können die Flotation 17 mit Deponie bzw. Verbrennung 18 sowie die Rejekt-Aufbereitungsanlagen 19 stark verkleinert ausgeführt werden oder vollständig entfallen.

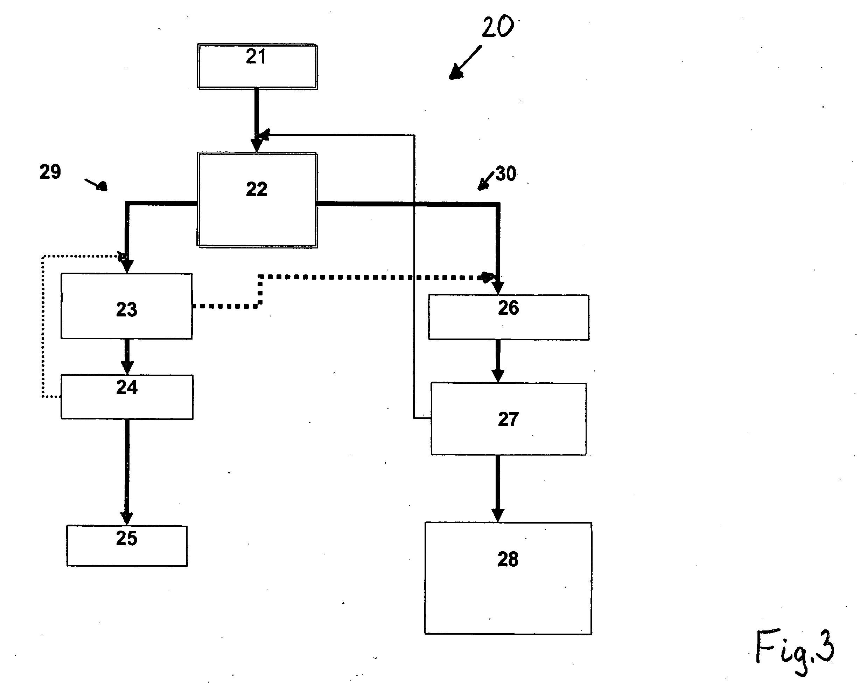

Fig. 3 zeigt die Rückgewinnungsstufe 20 im Detail. Den Beginn bildet eine Sortierung 21 an die eine Entaschung 22 anschließt. Bei der Entaschung 22 werden die gereinigten Fasern einer Faserlinie 29 und die stark pigmenthaltigen Ströme einer Pigmentlinie 30 zugeführt. Die Entaschung wird meist in Form einer Wäsche durchgeführt und kann mit den am Markt üblichen Geräten, z.B. Cleaner, Zentrifuge, Wäscher, Sedimentation o.ä., ausgeführt werden. Den Faserstrom gilt es möglichst von Pigmenten und vor allem von Binder.- Pigment-Agglomeraten frei zu bekommen, um zu vermeiden, dass diese Bestandteile zum Verursacher von Bladekratzern, - streifen oder Strich-ausbrechern führen können. Der Faserstrom wird daher vorzugsweise in eine Hydrozyklonreinigung (Cleaner-Stufe 23) und anschließend einen Eindicker 24 geführt, wobei das Filtrat zur Verdünnung vor die Cleaner-Stufe 23 zurückgeführt wird. Vor der Cleaner-Stufe 23 kann gegebenenfalls noch eine Fraktionierung eingesetzt werden, um die Reinheit des Faserstromes zu erhöhen. In weiterer Folge wird der Faserstrom einer Fasermahlung 25 zugeführt. Das Filtrat der Entaschung 22 - meist eine Mischung aus ca. 60 bis 85% anorganischen Anteilen wie Pigmente und den restlichen Feststoffen (ca. 20%) bestehend aus 60 bis 80% Binderbestandteilen mit dem Rest als Fasern / Feinstoffen - wird einem Mischbehälter 26 zugeführt, in den auch das Rejekt der Cleaner-Stufe 23 der Faserlinie eingebracht wird. Hier kann eine zusätzliche Feinstwäsche (nicht dargestellt) eingesetzt werden. Bei einer anderen Art der Ausführung kann auch eine Pigmentflotation oder andere Pigmentreinigungseinheit eingesetzt werden um Druckfarben oder andere Störstoffe abzuscheiden. An den Mischbehälter 26 schließt eine Eindickung 27 an. Die Eindickung kann je nach Wiedereinsatz der Pigmente in einer oder mehreren Stufen - vornehmlich zwei - erfolgen. Als Voreindickaggregate kommen alle am Markt erhältlichen Eindickaggregate in Frage. Aufgrund der guten gravimetrischen Trennbarkeit eignen sich als Apparate wie Sedimentation, Lamellensedimentation, Zyklone, Zentrifugen, Separatoren besonders gut. Auf die Eindickung 27 folgt dann eine Pigmentmahlung 28. Es hat sich gezeigt, dass in Bezug auf die Steilheit der Verteilkurve eine Niederkonsistenzmahlung - vornehmlich im Bereich von 20 bis 55% Trockensubstanz - gegenüber Frischpigment den wesentlichen Vorteil der Eindick-, Trocknungs- und Transportkosteneinsparung hat. Zusätzlich kann in den meisten Fällen auf den Zusatz von Dispergiermittel verzichtet werden, da der Restdispergiermittelanteil im Rückgewinnungsstoff bei den niedrigen Mahlkonsistenzen bereits ausreichend vorhanden ist.

Wird der Pigmentslurry im Hochkonsistenzbereich (50 % bis 77% Trockensubstanzgehalt) vermahlen sind Dispergiermittel zuzusetzen.

Für besondere Anforderungen an die Opazität bei gleichzeitig hoher Bahnfestigkeit und zur Reduktion des Mahlenergieverbrauches kann eine sogenannte Nachklassierstufe im Bereich der Mahlanlage zu einer weiteren Eingrenzung der Korngrößenverteilung installiert werden.

Der so aufbereitete Slurry entspricht weitestgehend einem Frischpigmentslurry.

Die Einhaltung einer Korngrößenverteilung wie diese für Vorstriche benötigt wird, kann aufgrund der vorgeschaltenen Prozessstufen und Einstellung der Mahlung selbst sichergestellt werden.

## Patentansprüche

1. Verfahren zur Wiederverwertung von Füllstoffen, Streichpigmenten und Faserstoffen der Papier-, Pappe- oder Kartonherstellung aus dem Ausschusssystem bzw. der Weiterverarbeitung von Papierbahnen nach der Papiermaschine wie Rollenschneider, Umroller, Querschneider etc., **dadurch gekennzeichnet, dass** diese Stoffe in eine Pigment- und Faserfraktion aufgeteilt und die Pigmentfraktion wieder im Pigmentkreislauf und die Faserfraktion wieder im Faserkreislauf eingesetzt werdenwerden, wobei die Fraktionierung in Faserstoffe und Pigment als Entaschung vorgesehen ist, um die Störstoffbeladung aus dem Primärkreislauf zu entfernen, der Pigmentstoffstrom eingedickt, der eingedickte Pigmentstoffstrom einer Mahlung unterworfen und der gemahlene Pigmentstoffstrom wieder dem Papier-, Pappe- oder Kartonherstellungsprozess zugeführt wird.

2. Verfahren nach Anspruch 1, **dadurch gekennzeichnet, dass** zusätzlich die Füllstoffe und Streichpigmente von den Restwasserschlämmen der Streichereiwässer, Deinkinganlagen, innerbetrieblichen Kläranlagen oder Abscheideanlagen der Wiederverwertung zugeführt werden.

3. Verfahren nach einem der Ansprüche 1 oder 2, **dadurch gekennzeichnet, dass** in weiterer Folge eine Feinstwäsche vorgesehen ist.

4. Verfahren nach einem der Ansprüche 1 bis 3, **dadurch gekennzeichnet, dass** der gemahlene Pigmentstoffstrom wieder als Streichpigment eingesetzt wird.

5. Verfahren nach einem der Ansprüche 1 bis 4, **dadurch gekennzeichnet, dass** Frischpigment zugemischt wird.

6. Anlage zur Wiederverwertung von Fasern, Füllstoffen und Streichpigmenten der Papier-, Pappe- oder Kartonherstellung aus dem Ausschusssystem bzw. der Weiterverarbeitung von Papierbahnen nach der Papiermaschine wie Rollenschneider, Umroller, Querschneider etc.,
**dadurch gekennzeichnet, dass** eine Entaschungsvorrichtung (22) vorgesehen ist, nach der Entaschungsvorrichtung (22) eine Faserlinie (29) zur Aufbereitung der Fasern und eine Pigmentlinie (30) zur Rückgewinnung der Füllstoffe und Streichpigment angeordnet sind, wobei in der Pigmentlinie (30) ein Eindickaggregat (27) vorgesehen ist und anschließend an das Eindickaggregat (27) ein Pigmentmahlaggregat (28) angeordnet ist.

7. Anlage nach Anspruch 6, **dadurch gekennzeichnet, dass** zusätzlich die Füllstoffe und Streichpigmente von den Restwasserschlämmen der Streichereiwässer, Deinkinganlagen, innerbetrieblichen Kläranlagen oder Abscheideanlagen der Entaschungsvorrichtung (22) zugeführt werden.

8. Anlage nach Anspruch 6 oder 7, **dadurch gekennzeichnet, dass** die Entaschungsvorrichtung (22) als Wäscher ausgebildet ist.

9. Anlage nach einem der Ansprüche 6 bis 8, **dadurch gekennzeichnet, dass** die Faserlinie aus einer Reinigungsstufe (23), einem Eindicker (24) sowie einer Fasermahlung (25) besteht, wobei vorzugsweise die Reinigungsstufe aus Hydrozyklonen, z.B. einer ein- oder mehrstufigen Cleaneranlage, besteht.

10. Anlage nach Anspruch 9, **dadurch gekennzeichnet, dass** vor der Reinigungsstufe (23) eine Fraktionierung und / oder Sortierung vorgesehen ist.

11. Anlage nach einem der Ansprüche 6 bis 10, **dadurch gekennzeichnet, dass** in der Pigmentlinie (30) eine Homogenisierungsstufe (z.B. Mischbehälter) (26) vorgesehen ist.

12. Anlage nach einem der Ansprüche 6 bis 11, **dadurch gekennzeichnet, dass** nach der Entaschung (22) in der Pigmentlinie (30) eine Feinstwäsche, eine Pigmentflotation oder andere Pigmentreinigungseinheit vorgesehen ist.

13. Anlage nach einem der Ansprüche 6 bis 12, **dadurch gekennzeichnet, dass** das Pigmentmahlaggregat (28) als Kugelmühle ausgebildet ist.

14. Anlage nach einem der Ansprüche 6 bis 13, **dadurch gekennzeichnet, dass** im Bereich der Mahlanlage eine Nachklassierstufe vorgesehen ist, die vorzugsweise nachgeschaltet ist.

15. Anlage nach einem der Ansprüche 9 bis 14, **dadurch gekennzeichnet, dass** die Eindickfiltrate (Pigment und Faserlinie) einer separaten Wasserreinigungsanlage zugeführt werden.

16. Anlage nach Anspruch 15, **dadurch gekennzeichnet, dass** die Wassserreinigungsaggregate vornehmlich der Ausschleusung von anionischen Störstoffen dienen.

17. Anlage nach Anspruch 15, **dadurch gekennzeichnet, dass** die Wassserreinigungsaggregate der Ladungskontrolle dienen.

## Claims

1. Process for reusing fillers, coating pigments, and fibres from the production of paper, paper board or board from the broke system or the conversion of paper webs after the paper machine, such as slitterwinders, rewinders, cross cutters, etc., **characterised by** these stocks being split into a pigment fraction and a fibre fraction and the pigment fraction being reintroduced to the pigment loop and the fibre fraction being reintroduced to the fibre loop, where the fractionation of fibres and pigments is designed as ash removal for removing the impurities from the primary loop, the pigment slurry flow is thickened, the thickened pigment slurry flow is subjected to grinding and the ground pigment slurry flow is recycled to the paper, paper board, or board production process.

2. Process according to Claim 1, **characterised by**, additionally, the fillers and coating pigments from the residual water sludges of the coating room water, deinking plants, internal effluent cleaning or separation plants, also being put to reuse.

3. Process according to one of the Claims 1 or 2, **characterised by** a finest washing step being provided further downstream.

4. Process according to one of the Claims 1 to 3, **characterised by** the ground pigment slurry flow being reused as coating pigment.

5. Process according to one of the Claims 1 to 4, **characterised by** fresh pigment being added.

6. Plant for reuse of fibres, fillers, and coating pigments from the production of paper, paper board or board from the broke system or the conversion of paper webs after the paper machine, such as slitterwinders, rewinders, cross cutters, etc., **characterised by** ash removal (22) being provided, by a fibre line (29) for processing the fibres and a pigment line (30) for recovering the fillers and coating pigments being arranged after the ash removal (22), with a thickening unit (27) being provided in the pigment line (30) and a pigment grinding unit (28) being located downstream of the thickening unit (27).

7. Plant according to Claim 6, **characterised by**, additionally, the fillers and coating pigments from the residual water sludges of the coating room water, deinking plants, internal effluent cleaning or separation plants, being led to the ash removal unit (22).

8. Plant according to Claim 6 or 7, **characterised by** the ash removal unit (22) being designed as a washer.

9. Plant according to one of the Claims 6 to 8, **characterised by** the fibre line consisting of a cleaning stage (23), a thickener (24) and fibre grinding (25), with the cleaning stage consisting preferably of hydro-cyclones, e.g., a single-stage or a multi-stage cleaner system.

10. Plant according to Claim 9, **characterised by** a fractionation and/or screening stage being provided ahead of the cleaning stage (23).

11. Plant according to one of the Claims 6 to 10, **characterised by** a homogenisation stage (26), e.g. a mixing tank, being provided in the pigment line (30).

12. Plant according to one of the Claims 6 to 11, **characterised by** a finest washing step, a pigment flotation or other pigment cleaning unit being provided in the pigment line (30) after the ash removal unit (22).

13. Plant according to one of the Claims 6 to 12, **characterised by** the pigment grinding unit (28) being designed as a ball mill.

14. Plant according to one of the Claims 6 to 13, **characterised by** a post-classifying stage being provided in the area of the grinding unit, preferably downstream of the grinding unit.

15. Plant according to one of the Claims 9 to 14, **characterised by** the thickening filtrates (pigment and fibre lines) being fed to a separate water cleaning plant.

16. Plant according to Claim 15, **characterised by** the water cleaning units mainly serving the extraction of anionic trash.

17. Plant according to Claim 15, **characterised by** the water cleaning units serving for load control.

## Revendications

1. Procédé pour la réutilisation de charges, pigments de couchage et fibres provenant de la production de papier, de carton-pâte ou de carton, issus d'un système à cassés ou de façonnage des nappes de papier après la machine à papier, tels que découpeuses-bobineuses, bobineuses, coupeuses transversales, etc., **caractérisé en ce que** ces matières se trouvent partagées en une fraction pigments et une fraction fibres, et que la fraction pigments est réintroduite dans le circuit à pigments et la fraction fibres et réintroduite dans le circuit à fibres, où le fractionnement des fibres et des pigments est étudié en tant que élimination des cendres pour éliminer les impuretés à partir du circuit primaire, le courant de pigments est épaissi, le courant de pigments épaissis est assujetti à un broyage et le courant de pigments broyés se trouve recyclé vers le processus de production de papier, de carton-pâte ou de carton.

2. Procédé selon la revendication 1, **caractérisé en ce qu'**en outre, les charges et les pigments de couchage présents dans les boues d'eau résiduelle des eaux de couchage, installations de désencrage, installations internes d'épuration ou de séparation, sont aussi réutilisés.

3. Procédé selon l'une des revendications 1 ou 2, **caractérisé en ce qu'**en aval, une étape de lavage très fin est prévue.

4. Procédé selon l'une des revendications 1 à 3, **caractérisé en ce que** le courant de pigments broyés est réutilisé en tant que pigment de couchage.

5. Procédé selon l'une des revendications 1 à 4, **caractérisé en ce que** du pigment frais est ajouté.

6. Installation pour la réutilisation de fibres, charges et pigments de couchage provenant de la production de papier, de carton-pâte ou de carton, issus d'un système à cassés ou de façonnage des nappes de papier après la machine à papier, tels que découpeuses-bobineuses, bobineuses, coupeuses transversales, etc., **caractérisé en ce qu'**une élimination des cendres (22) est prévue, une ligne de fibres (29) pour traiter les fibres et une ligne pigment (30) pour la récupération des charges et pigments de couchage est disposée après l'élimination des cendres (22), une unité d'épaississement (27) prévue dans la ligne de pigment 30) et une ligne de broyage des pigments (28) étant disposée en aval de l'unité de broyage (27).

7. Installation selon la revendication 6, **caractérisée en ce qu'**en outre, des charges et pigments présents dans les boues d'eau résiduelle des eaux de couchage, installations de désencrage, installations internes d'épuration ou de séparation, sont alimentés vers l'élimination des cendres (22).

8. Installation selon la revendication 6 ou 7, **caractérisée en ce que** l'élimination des cendres (22) est étudiée en tant que lavage.

9. Installation selon l'une des revendications 6 à 8, **caractérisée en ce que** la ligne de fibres comporte une étape d'épuration (23), un épaississeur (24) et un broyage de fibres (25), l'étape d'épuration comprenant, de préférence, des hydro-cyclones, p. ex. un système cleaner à une ou plusieurs étapes.

10. Installation selon la revendication 9, **caractérisée en ce qu'**une étape de fractionnement et/ou étape d'épuration est prévue avant l'étape d'épuration (23).

11. Installation selon l'une des revendications 6 à 10, **caractérisée en ce qu'**une étape d'homogénéisation (26), p. ex. une caisse de mélange, est prévue dans la ligne de pigments (30).

12. Installation selon l'une des revendications 6 à 11, **caractérisée en ce qu'**une étape de lavage très fin, une flottation de pigment ou autre unité d'épuration des pigments est prévue dans la ligne des pigments (30) après l'élimination des cendres (22).

13. Installation selon l'une des revendications 6 à 12, **caractérisée en ce que** l'unité de broyage de pigments (28) est étudiée en tant que broyeur à billes.

14. Installation selon l'une des revendications 6 à 13, **caractérisée en ce qu'**une étape de classage postérieur est prévue dans la zone de l'unité de broyage, de préférence en aval de l'unité de broyage.

15. Installation selon l'une des revendications 9 à 14, **caractérisée en ce que** les filtrats de l'épaississeur (lignes pigments et fibres) sont menés à une installation séparée pour épuration d'eaux.

16. Installation selon la revendication 15, **caractérisée en ce que** les unités d'épuration d'eau servent avant tout à l'extraction des impuretés anioniques.

17. Installation selon la revendication 15, **caractérisée en ce que** les unités d'épuration d'eau servent au contrôle de charge.
